# EUROPEAN PATENT SPECIFICATION

(11) **EP 4 097 653 B1**
(45) Date of publication and mention of the grant of the patent: **14.10.2026**
(21) Application number: 21748262.9
(22) Date of filing: 26.01.2021
(51) Int. Cl.: G06N 20/20, G06N 3/045, G06N 3/10, G06F 16/2457, G06N 5/02, G06N 3/08, G06N 3/0455, G06N 3/0464, G06N 3/0495, G06N 3/09, G06N 3/0985, G06N 3/088, G06N 5/01

(54) **METHODS AND SYSTEMS FOR DYNAMICALLY GENERATING A PLURALITY OF MACHINE LEARNING SYSTEMS DURING PROCESSING OF A USER DATA SET**
VERFAHREN UND SYSTEME ZUM DYNAMISCHEN ERZEUGEN EINER VIELZAHL VON MASCHINENLERNSYSTEMEN WÄHREND DES VERARBEITENS EINES BENUTZERDATENSATZES
PROCÉDÉS ET SYSTÈMES DE GÉNÉRATION DYNAMIQUE D'UNE PLURALITÉ DE SYSTÈMES D'APPRENTISSAGE MACHINE PENDANT LE TRAITEMENT D'UN ENSEMBLE DE DONNÉES D'UTILISATEUR

(30) Priority: 27.01.2020 US 202062966450 P
(43) Date of publication of application: 07.12.2022
(73) Proprietor: Akkio Inc., Boston, MA 02114 (US)
(72) Inventor: REILLY, Jonathon, Boston, MA 02114 (US); PARANGI, Aperahama, Boston, MA 02114 (US); WISNESKI, Craig, Boston, MA 02114 (US)
(74) Representative: Barker Brettell LLP
(86) International application number: PCT/US2021/015080
(87) International publication number: WO 2021/154722

(56) References cited:
- EP-A2- 3 355 248
- US-A1- 2014 022 100
- US-A1- 2016 071 014
- US-A1- 2017 300 814
- US-A1- 2019 213 115
- US-B1- 10 360 482
- US-B1- 10 431 328

## Description

### BACKGROUND

The disclosure relates to methods for dynamically generating machine learning systems. More particularly, the methods and systems described herein relate to functionality for dynamically generating a plurality of machine learning systems during processing of a user data set.

Conventionally, platforms for implementing machine learning are created for use by highly technical users, domain experts in machine learning, and/or data scientists who are typically required to make detailed technical choices throughout the processes for creating and deploying prediction models. Such users must typically have in-depth technical knowledge in configuring cloud compute platforms, preparing data for processing by machine learning models, and so forth.

US 2017/300814 discloses a system comprising computers which implement a combined machine learning model for processing an input including multiple features to generate a predicted output for the machine learning input. The combined model includes: a deep machine learning model configured to process the features to generate a deep model output; a wide machine learning model configured to process the features to generate a wide model output; and a combining layer configured to process the deep model output generated by the deep machine learning model and the wide model output generated by the wide machine learning model to generate the predicted output, in which the deep model and the wide model have been trained jointly on training data to generate the deep model output and the wide model output.

US 10360482 discloses systems and methods for generating a machine learning model that is a composite of at least two other models (e.g., crowd-sourced models contributed by users). Each of the contributed models provide output values that may not be to scale. To account for these differences, a normalization factor for a first machine learning model is generated to adjust values produced by the first machine learning model to correspond with results from the second machine learning model. The crowd-sourced models along with the normalization factor are included in the new image model generated.

US 10431328 discloses a computer-implemented method and system for anatomical tree structure analysis. The method may begin with receiving a task of the anatomical tree structure analysis. Then, a set of positions in the anatomical tree structure may be set or received, by a processor, as the sampling positions for model inputs and model outputs. Then model inputs may be determined, by the processor, at the sampling positions on the basis of the task. An encoder may be selected, by the processor, for each position of the set of positions on the basis of the task. The encoder may be configured to receive a model input at each position and extract features for the corresponding position. After that, a tree structured recurrent neural network (RNN) may be constructed by the processor with nodes corresponding to the set of positions and connected with the respective encoders. An RNN unit for each node may be selected on the basis of the task and an information propagation among the nodes may be set on the basis of the spatial constraints of the set of positions in the anatomical tree structure. The generated treed structured RNN may be provided for performing the task of the anatomical tree structure analysis.

### BRIEF DESCRIPTION

According to one aspect of the invention, there is provided a computer-implemented method according to claim 1.

Preferable features are defined in the appended dependent claims.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1A is a block diagram depicting an embodiment of a system for dynamically generating a plurality of machine learning systems during processing of a user-specified data set;
FIG. 1B is a block diagram depicting an embodiment of output generated by a user interface engine in a system for dynamically generating a plurality of machine learning systems during processing of a user-specified data set;
FIG. 1C is a block diagram depicting an embodiment of output generated by a user engine interface in a system for dynamically generating a plurality of machine learning systems during processing of a user-specified data set;
FIG. 2 is a flow diagram depicting an embodiment of a method for dynamically generating a plurality of machine learning systems during processing of a user-specified data set;
FIGs. 3A - 3M are block diagrams depicting embodiments of output generated by a user interface engine in a system for dynamically generating a plurality of machine learning systems during processing of a user-specified data set; and
FIGs. 4A-4C are block diagrams depicting embodiments of computers useful in connection with the methods and systems described herein.

### DETAILED DESCRIPTION

The methods and systems described herein may provide functionality for dynamically generating a plurality of machine learning systems during processing of a user data set. In one aspect, the systems described herein provide functionality for creating, using, and deploying machine learning-based predictive models in a simplified, highly-automated manner requiring minimal user input or intervention.

The systems and methods described in a non-claimed embodiment may be used in a variety of applications, including, without limitation, fraud detection, likelihood to churn, next best action, predictive maintenance, customer support issue identification, automated issue/ticket tagging, and so on. The systems and methods described herein are used to process and generate output regarding a variety of types of input data, including audio, video, and images.

By way of a non-claimed example, the methods and systems described herein may provide functionality allowing a user to create and use a lead-scoring application for business sales pipeline automation by (1) uploading a dataset that contains information about their historical sales activity, such as a table of information with one or more fields such as win/loss, deal size, duration, company industry, etc., (2) choosing a field to predict from a drop-down menu, and (3) inputting data to predict into the resulting model either by direct entry, batch upload, or via API.

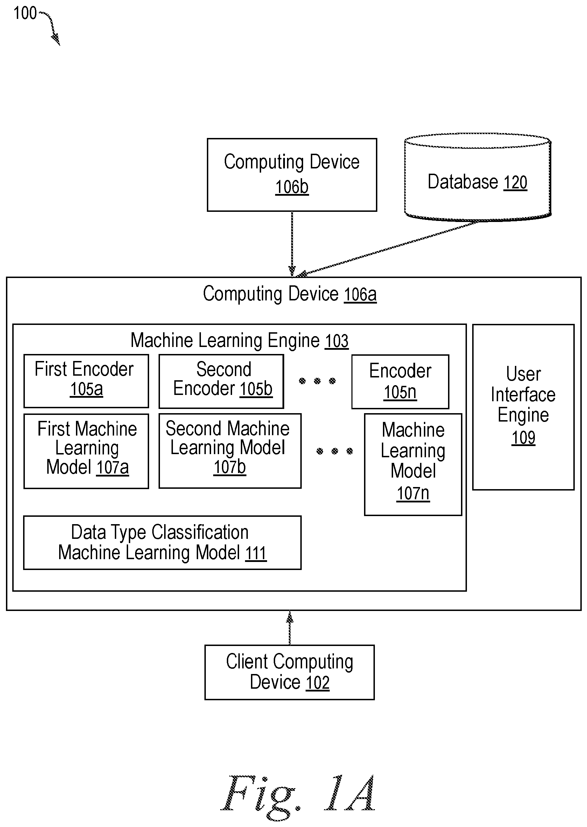

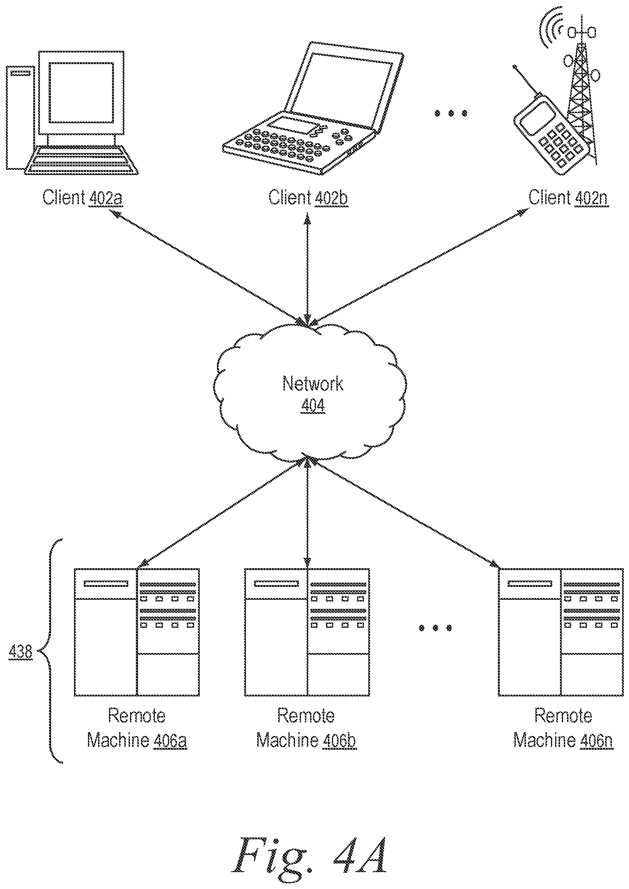

Referring now to FIG. 1A, a block diagram depicts one embodiment of a system for dynamically generating a plurality of machine learning systems during processing of a user data set. In brief overview, the system 100 includes a computing device 106a, a computing device 106b, a client computing device 102, a machine learning engine 103, a first encoder 105a, a second encoder 105b, a first machine learning model 107a, a second machine learning model 107b, a user interface 109, a data type classification machine learning model 111, and a database 120. The computing devices 106a, 106b, and 102 may be a modified type or form of computing device (as described in greater detail below in connection with FIGs. 4A-4C) that have been modified to execute instructions for providing the functionality described herein; these modifications result in a new type of computing device that provides a technical solution to problems rooted in computer technology, such as generation of new machine learning engines during processing of a user-provided data set. The system 100 may be deployed in an on-premise fashion. The system 100 may execute on a compute platform (e.g., at the edge of a computer network) and provide access to users associated with one or more computing devices 102 that are located remotely from the computing device 106a of the system 100.

The machine learning engine 103 may be provided as a software component. The machine learning engine 103 may be provided as a hardware component. The computing device 106a may execute the machine learning engine 103. The machine learning engine 103 may include functionality for identifying one or more machine learning model architectures which, after training, maximize the accuracy of a task, such as a user-specified task. The machine learning engine 103 may include functionality for generating machine learning models. The machine learning engine 103 may include functionality for identifying one or more methods for encoding user data. The machine learning engine 103 may provide the functionality of a neural architecture search engine. The machine learning engine 103 may provide the functionality of a neural architecture search system.

The system 100 may include a plurality of encoders 105a-*n*. The encoders 105a-*n* are part of the machine learning engine 103. Encoders may include text encoders, such as, without limitation, word2vec style word embeddings or transformer text encoders. Encoders may include sequence encoders, such as, without limitation, Fourier transform encoders or signature transforms or a neural network that has learned a sequence embedding "positional encoding" for dates or numbers (e.g., encoded(x) = sin(ax) for some set of numbers a). Encoders include convolutional neural network (CNN) image encoders. Encoders include CNN audio encoders. The machine learning engine 103 may include or have access to a machine learning model for selecting an encoder to use with a particular data set.

The system 100 may include a plurality of machine learning models 107a-*n*.

The system 100 may include a data type classification machine learning model 111.

The computing device 106a may include or be in communication with the database 120. The database 120 may store data related to user-specified data sets, for example. The database 120 may be an ODBC-compliant database. For example, the database 120 may be provided as an ORACLE database, manufactured by Oracle Corporation of Redwood Shores, CA. In other embodiments, the database 120 can be a Microsoft ACCESS database or a Microsoft SQL server database, manufactured by Microsoft Corporation of Redmond, WA. In other embodiments, the database 120 can be a SQLite database distributed by Hwaci of Charlotte, NC, or a PostgreSQL database distributed by The PostgreSQL Global Development Group. In still other embodiments, the database 120 may be a custom-designed database based on an open source database, such as the MYSQL family of freely available database products distributed by Oracle Corporation of Redwood City, CA. In other embodiments, examples of databases include, without limitation, structured storage (e.g., NoSQL-type databases and BigTable databases), HBase databases distributed by The Apache Software Foundation of Forest Hill, MD, MongoDB databases distributed by 10Gen, Inc., of New York, NY, an AWS DynamoDB distributed by Amazon Web Services and Cassandra databases distributed by The Apache Software Foundation of Forest Hill, MD. In further embodiments, the database 120 may be any form or type of database.

Although, for ease of discussion, the machine learning engine 103, the first encoder 105a, the second encoder 105b, the first machine learning model 107a, the second machine learning model 107b, the user interface engine 109, the data type classification machine learning model 111, and the database 120 are described in FIG. 1A as separate modules, it should be understood that this does not restrict the architecture to a particular implementation. For instance, these components may be encompassed by a single circuit or software function or, alternatively, distributed across a plurality of computing devices.

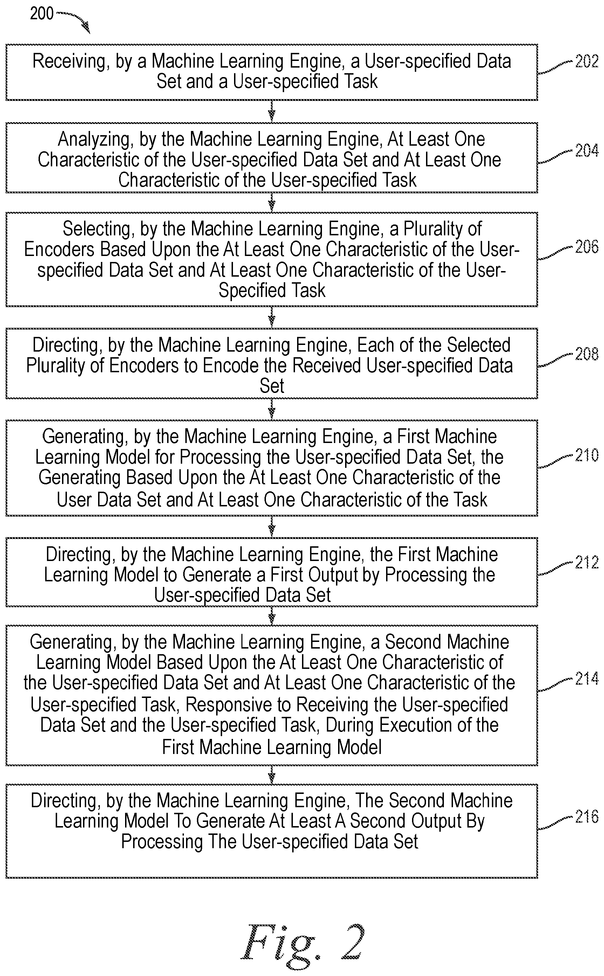

Referring now to FIG. 2, in brief overview, a block diagram depicts one embodiment of a method 200 for dynamically generating a plurality of machine learning systems during processing of a user data set. The method 200 includes receiving, by a machine learning engine, a user-specified data set and a user-specified task (202). The method 200 includes analyzing, by the machine learning engine, at least one characteristic of the user-specified data set and at least one characteristic of the user-specified task (204). The method 200 includes selecting, by the machine learning engine, a plurality of encoders based upon the at least one characteristic of the user-specified data set and at least one characteristic of the user-specified task (206). The method 200 includes directing, by the machine learning engine, each of the selected plurality of encoders to encode the received user-specified data set

(208). The method 200 includes generating, by the machine learning engine, a first machine learning model for processing the user-specified data set, the generating based upon the at least one characteristic of the user data set and at least one characteristic of the task (210). The method 200 includes directing, by the machine learning engine, the first machine learning model to generate a first output by processing the user-specified data set (212). The method 200 includes generating, by the machine learning engine, a second machine learning model based upon the at least one characteristic of the user-specified data set and at least one characteristic of the user-specified task, responsive to receiving the user-specified data set and the user-specified task, during execution of the first machine learning model (214). The method 200 includes directing, by the machine learning engine, the second machine learning model to generate at least a second output by processing the user-specified data set (216).

Referring now to FIG. 2, in greater detail and in connection with FIG. 1A-1C, the method 200 includes receiving, by a machine learning engine, a user-specified data set and a user-specified task (202). The machine learning engine 103 may receive the user-specified data set directly. The machine learning engine 103 may receive the user-specified data set indirectly. The machine learning engine 103 may receive the user-specified task directly. The machine learning engine 103 may receive the user-specified task indirectly.

The user interface engine 109 may receive the user-specified data set. The user interface engine 109 may receive a uniform resource link or other identifier of a network address for a computing device 106b storing the user-specified data set. The user interface engine 109 may receive the user-specified data task. The user interface engine 109 may store the user-specified data set in the database 120. The user interface engine 109 may store the user-specified task in the database 120. The machine learning engine 103 may retrieve the user-specified data set from the database 120. The machine learning engine 103 may retrieve the user-specified data set from a third party computing device 106b. The machine learning engine 103 may retrieve the user-specified task from the database 120.

The user interface engine 109 may provide one or more interface elements with which users can interact with the system and provide user-specified data sets and/or user-specified tasks; for example, the system 100 may provide a web-based user interface engine 109 with which the user may provide the user-specified data set and the user-specified task. A cloud-based implementation of the system 100 may include one or more user interface elements that include instructions guiding a user through one or more steps, from uploading a dataset the user has (including, e.g., choosing an existing dataset), to having the system create a predictive model based on that dataset, to having the system deploy that model such that a user can input new data and generate predictions on it. Data sets may be obtained through integrations with one or more third-party applications (e.g., a customer database may be selected through an authenticated connection to a user's account with Salesforce, G-Suite, Zendesk, etc.). The system 100 may include functionality allowing users to set up an API endpoint to programmatically pass data into a model with which to generate predictions; such a model may receive new information that allows the predictive model to learn and change over time (e.g., to improve its prediction accuracy by receiving back new results).

The system 100 may include functionality allowing users to combine multiple datasets or split or filter one or more datasets in a manner that facilitates creation of a prediction model. Such functionality may allow for efficiently joining very large datasets with imperfectly matching data, especially in embodiments in which efficiency is important because otherwise joining such datasets would be intractable. In one embodiment, a user can join, or merge, datasets without common unique identifiers using one or more artificial intelligence techniques, such as by executing a nearest-neighbor or similar clustering process in a learned metric space. The metric space embedding is learned by means of a masking variational autoencoder or other methods of metric learning. Execution of such functionality may result in matching columns using the structure of the data itself instead of labels (such as row or column labels) or other identifiers - by examining what values are shared or almost shared across the columns on which the system is trying to make matches, the system may identify and merge data even where there are no such labels. Therefore, the method 200 may include generating a search engine, including an index; populating the index with a plurality of user-specified data sets; querying the index to identify common data (e.g., data having the same value in each of two or more data sets) across the plurality of user-specified data sets; removing duplicate data across the plurality of user-specified data sets to generate de-duplicated data sets; and merging the de-duplicated data sets. In one embodiment, the index is an acceleration structure that allows the system to determine if a match exists between a given row and any other row in a given dataset.

The method 200 includes analyzing, by the machine learning engine, at least one characteristic of the user-specified data set and at least one characteristic of the user-specified task (204). When starting to work with a dataset, the machine learning engine 103 may identify a type of input data included in the user-specified data set; for example, and without limitation, the machine learning engine 103 may infer a data type for each column of data in a data set. The machine learning engine 103 may assign the input data type to the user-specified data set, which may aid in inputting the user-specified data set to one or more machine learning models 107. The machine learning engine 103 may identify one or more data types by applying heuristics, such as character or token frequency. The machine learning engine 103 may execute one or more machine learning models 111 trained to classify data into one of several data types (e.g., dates, names, unique IDs, Categories, and so on) in order to identify the type of input data included in the user-specified data set (e.g., by executing a data type classification machine learning model 111 shown in FIG. 1A). Other types of data characteristics include, without limitation, statistical properties of the dataset, such as distribution of values, appearance of values, name of values. The characteristics of the user-specified data set and of the user-specified task may be features of the data and of the task that are useful in completing tasks - for example, without limitation if the task involves prediction (such as sales in a future year based on sales in a prior year), the characteristics may be features that are known to influence accuracy of machine learning models trained to make predictions.

The method 200 includes selecting, by the machine learning engine, a plurality of encoders based upon the at least one characteristic of the user-specified data set and at least one characteristic of the user-specified task (206). In some embodiments, the machine learning engine 103 may include or have access to a machine learning model executed to select an encoder for use with a particular data set. In some embodiments, instead of the machine learning engine 103 selecting the plurality of encoders 105a-*n*, a user selects one or more of the plurality of encoders 105a-*n*. The method 200 may include using an inferred data type (as described above) in selecting the plurality of encoders 105a-*n*. Characteristics may include information identifying features of the data such as what kind of data the data is - e.g., text, numbers, dates, images, etc.

To prepare data for use by one or more generated machine learning models 107a-*n*, the data may be compressed before training, which may speed up the training, with a larger advantage on bigger datasets; for example, in data sets that include repetitive data, compressing such data may accelerate model training of the machine learning model. By way of example, a relatively small number of samples can "stand in" for the entire dataset by being representative examples, thus saving much training time. This data distillation may be accomplished by minimization of the mutual information across the dataset samples as well as the construction of synthetic samples ('archetypal samples'), which may stand in for multiple natural samples.

The method 200 includes directing, by the machine learning engine, each of the selected plurality of encoders to encode the received user-specified data set (208). The encoders here may transform the data from one format to another - for example, from user provided strings such as "I want help" or "7.2" to numerical representations that are amenable to processing by machine learning models.

The method 200 includes generating, by the machine learning engine, a first machine learning model for processing the user-specified data set, the generating based upon the at least one characteristic of the user data set and at least one characteristic of the task (210). The machine learning engine 103 may then train the generated machine learning model. The first machine learning model 107a may be a neural network. The first machine learning model 107a may be a machine learning model other than a neural network. For example, the machine learning model 107a may be a Gradient Boosted Decision Tree, a radial basis function, a K-nearest neighbor (KNN) model, or other machine learning model. To generate the machine learning model 107a, a novel approach to efficient neural architecture search may be implemented: by means of executing a neural architecture search to progressively build model ensembles (e.g., to generate a plurality of machine learning models 107a-*n*), the expressiveness of the neural architecture is scaled until it reaches the expressivity critical threshold wherein it can fit the target function.

In some embodiments, the machine learning engine 103 executes a method for training the machine learning model 107, the method including training, by the machine learning engine, the machine learning model using a first training data set; selecting, by the machine learning engine, a second training data set including corrupted data and having a level of data corruption selected using a metalearning process, based on at least one characteristic of the first training data set, and based on an architecture of the machine learning model (metalearning may also be referred to as "learning to learn" and may refer to a recursive learning process whereby the system not only optimizes a specific model but also optimizes how that model is generated, and potentially that feedback process as well, and so on); training, by the machine learning engine, the machine learning model using the second training data set including corrupted data; evaluating, by the machine learning engine, a level of accuracy of the machine learning model using a third training data set; and determining, by the machine learning engine, that the level of accuracy satisfies a threshold level of accuracy. The corrupted data may include at least one simulated clerical error. The method may include generating, by the machine learning engine, using the trained machine learning engine, at least one sample prediction; and providing, by the machine learning engine, to a user, an application programming interface with which to access the trained machine learning model. The method may include training, by the machine learning engine, a machine learning model using a first training data set; training, by the machine learning engine, the machine learning model using a second training data set including hidden data unavailable to the machine learning model; and determining, by the machine learning engine, that the level of accuracy satisfies a threshold level of accuracy.

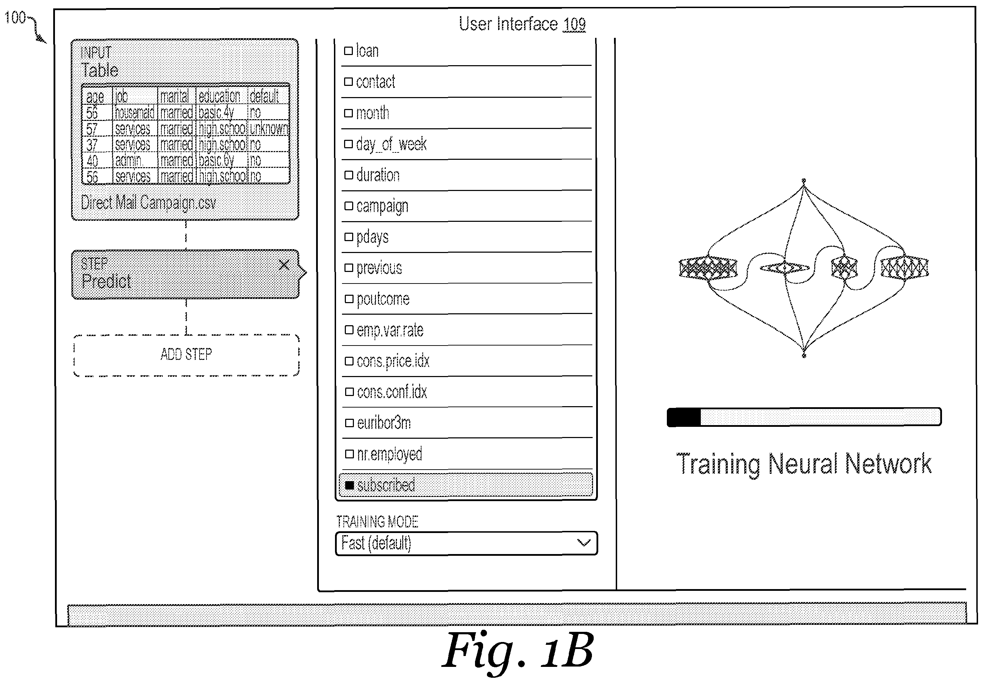

Referring to FIG. 1B, a block diagram depicts an embodiment of output generated by a user interface engine 109. As shown in FIG. 1B, the user interface engine 109 may provide an indication of a status of the execution of the method 200. As shown in FIG. 1B, the user interface engine 109 indicates that a machine learning model has been generated (a neural network in this example) and is being trained.

Referring back to FIG. 1A, in one embodiment, the method 200 includes generate a machine learning model that is capable of learning different types of functions. Such basis functions may include primitives, such as, without limitation, matrix multiplication, sparse matrix multiplication, normalization, and others.

In some embodiments, the method 200 includes receiving, by the machine learning engine, an identification of an amount of time to spend on training a generated machine learning model 107. In one such embodiment, the method 200 selects the amount of time to spend on training the generated machine learning model 107 and allows a user to optionally spend more time in training after they receive an initial set of results.

The method 200 includes directing, by the machine learning engine, the first machine learning model to generate a first output by processing the user-specified data set (212).

The method 200 may include identifying one or more ranges, or buckets, to simplify machine learning model outputs when predicting numbers. Several prior distributions may be assumed and compared for best fit; buckets may be determined as the threshold wherein a target percentage (say 85%) of the probability mass is within the bucket. As an example, a single prediction may be a point estimate while the actual data is a distribution. The method 200 may display to a user (e.g., via a user interface generated by the user interface engine 109) a predicted range for a numerical result instead of an exact value for a numerical prediction. As an example, if the predictive machine learning model can correctly predict a numerical outcome within a range (like, between 100 to 110) it may display that range instead of the predicted number itself.

The method 200 includes generating, by the machine learning engine, a second machine learning model based upon the at least one characteristic of the user-specified data set and at least one characteristic of the user-specified task, responsive to receiving the user-specified data set and the user-specified task, during execution of the first machine learning model (214). The second machine learning model 107b may be a machine learning model other than a neural network. In some embodiments, the method 200 includes generating, by the machine learning engine, a second machine learning model based upon the at least one characteristic of the user-specified data set and at least one characteristic of the user-specified task, responsive to receiving the user-specified data set and the user-specified task, subsequent to execution of the first machine learning model.

The method 200 includes directing, by the machine learning engine, the second machine learning model to generate at least a second output by processing the user-specified data set (216). The method 200 may include directing, by the machine learning engine, the second machine learning model to determine a residual of the first output.

There may be certain functions that neural networks (and/or radiant boosted learning trees and/or gradient boosted decision trees) cannot learn without special additions (e.g., feature engineering). Functions that are periodic in nature are one example of this, although they are useful in predicting seasonality of sales, etc. In one embodiment, the method 200 includes formulating, by the machine learning engine 103, the data in a way that increases a level of efficiency in generating a machine learning model 107 that has a higher level of accuracy, for example, by generating a machine learning model 107 that is better suited to completing one type of task over another. Therefore, in some embodiments, implementation of a method that includes generating and executing a plurality of machine learning models, each of which is suited to completing different types of tasks, increases a level of accuracy of the output.

The method 200 may include providing, by the machine learning engine 103, access to at least one of the first output and the second output. The machine learning engine 103 may dynamically update data displayed to a user in a user interface to include to at least one of the first output and the second output. Alternatively, the machine learning engine 103 may instruct the user interface engine 109 to dynamically update data displayed in a user interface. The user may see information about the quality of the model generated, such as an accuracy score.

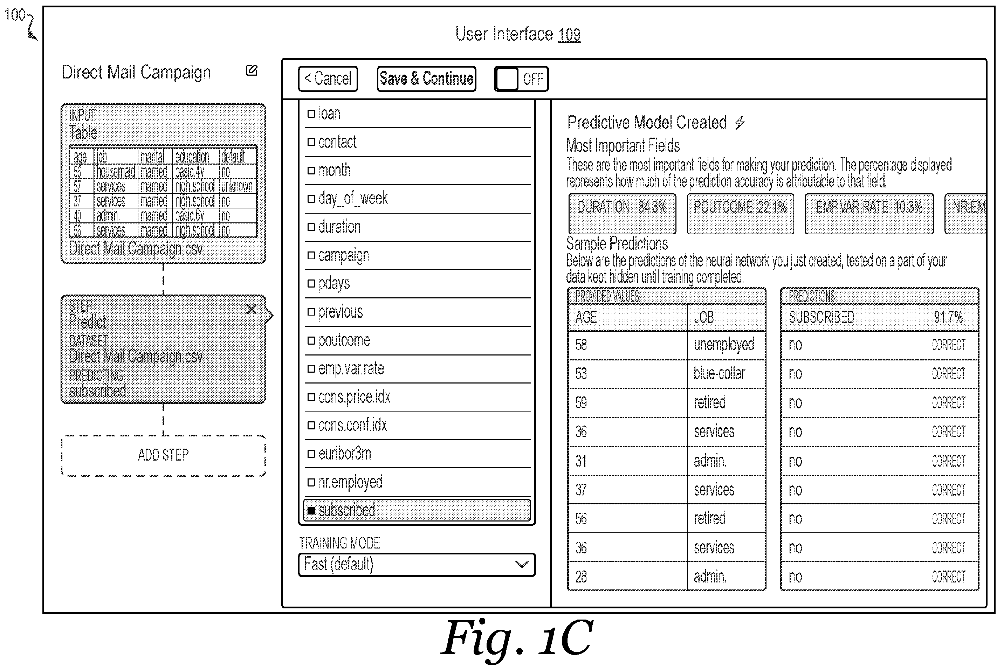

Referring now to FIG. 1C, a block diagram depicts an embodiment of output generated by the user engine interface 109. As shown in FIG. 1C, the user interface engine 109 may display to a user an indication that the system 100 generated a predictive machine learning model. The user may see a sampling of the validation data. Additionally, the user may see a section identifying the "Most Important Fields," which provides information about what factors or variables were most important, or had the most predictive power in determining outcomes for the model with this dataset. As part of generating the machine learning prediction model 107, the most important factors for the predictive power of that model can be identified. As an example of this, and as shown in FIG. 1B, if "duration" and "poutcome" are the two most important fields for a particular prediction model 107, those two fields may be shown to the user. The method may include execution of a sensitivity analysis of input variables to machine learning model predictions by using various sensitivity analysis methods, such as field ablation and direct modeling of the conditional probability distribution. In one embodiment, the method 200 includes removing a portion of the user-specified data set (e.g., a column of data identified as a particular "field"); directing the plurality of machine learning models to process the data set again; comparing a second set of output from each of the plurality of machine learning models with at least the second output; determining a level of impact the removal of the portion of the user-specified data set had on the output; determining that the determined level of impact exceeds a threshold level of impact; labeling the removed portion (e.g., as "important"), based upon the determination that the determined level of impact exceeds a threshold level of impact; and providing an identification of the labeled portion to a user. For example, the method 200 may include analyzing an amount by which the models' results changed due to a particular factor, normalized by the amount the input varies on the whole population - that is, analyzing the variance of the gradient of the loss per input channel, normalized by the variance on the input channel. As another example, the method 200 may include taking the variance gradient of the loss with respect to the input fields, normalized by the variance of those input fields.

Referring back to FIG. 1A, in some embodiments, the machine learning engine 103 determines that the second output has a higher level of accuracy than the first output and only displays the second output. In other embodiments, the machine learning engine 103 determines that the first output has a higher level of accuracy than the second output and only displays the first output - for example, and without limitation, in one such embodiment, the machine learning engine 103 may have executed the method 200 to generate the first output and second output and then generated a third machine learning model 107c to generate a third output but the machine learning engine 103 may determine that the third output has a lower level of accuracy than the second output and determines, as a result, to display the second output not the third output. In other embodiments, the method 200 may include executing one or more regression tests against earlier models to ensure a threshold level of accuracy.

In one embodiment, therefore, the method 200 may include identifying an input data type of the user-specified data set, distilling data to essential elements, generating one or more machine learning models, and deploying the generated machine learning model for use in completing one or more user-specified tasks (e.g., by deploying the machine learning model to a cloud-based interface or to an on-premise machine, or to an edge network computing device).

In one embodiment, the methods and systems described herein provide functionality for end-to-end machine learning model generation, in which a user provides data, or an authenticated link to data, selects a task to complete (e.g., what they want the system to predict), and the generation of the one or more machine learning models needed to complete the tasks and the completion of such tasks occurs automatically (e.g., without human intervention), in real-time - that is, after the user has provided the data and requested completion of the task and while the user is waiting. Therefore, in some embodiments, a method for dynamically generating a plurality of machine learning models for processing a user data set includes receiving, by a machine learning engine, a user-specified data set and a user-specified task; analyzing, by the machine learning engine, at least one characteristic of the user-specified data set and at least one characteristic of the user-specified task; selecting, by the machine learning engine, a plurality of encoders based upon the at least one characteristic of the user-specified data set and at least one characteristic of the user-specified task; directing, by the machine learning engine, each of the selected plurality of encoders to encode the received user-specified data set; generating, by the machine learning engine, after receiving the user-specified data set, at least one machine learning model for processing the user-specified data set, the generating based upon the at least one characteristic of the user data set and at least one characteristic of the task; and directing, by the machine learning engine, the at least one machine learning model to generate a first output by processing the user-specified data set.

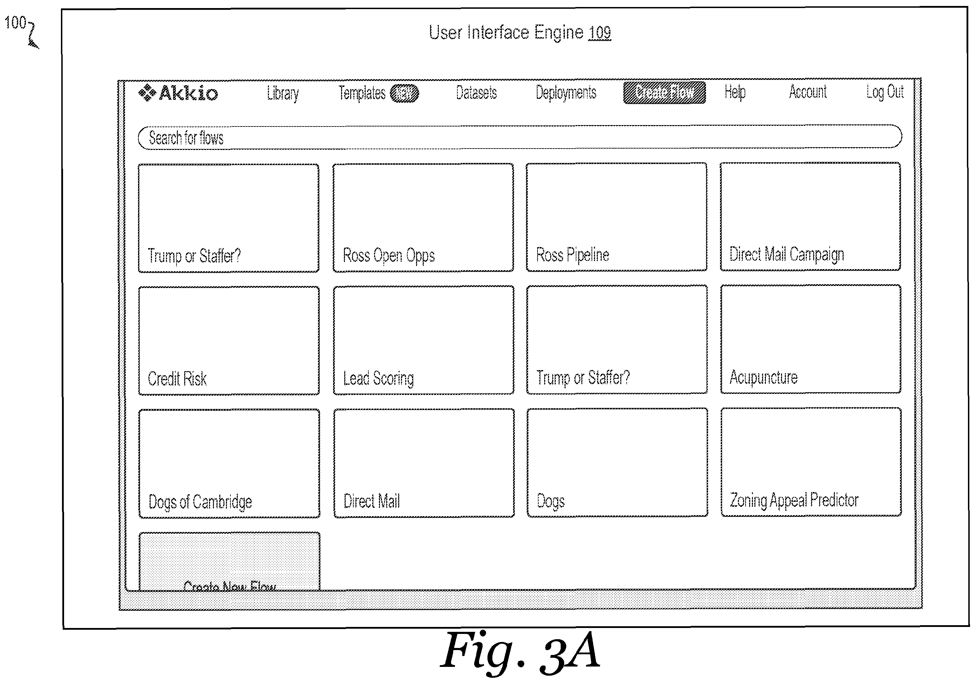

Referring now to FIGs. 3A - 3M and 1B-1C, block diagrams depict embodiments of output generated by user interface engines in a system for dynamically generating a plurality of machine learning systems during processing of a user-specified data set, using as an example data provided by a client for use in a direct mail campaign prediction task.

As shown in FIG. 3A, a Flow Home Page allows a user to view and search for a "Flow", which may refer to a workflow executed to train and deploy a machine learning model 107. The user may either select a Flow they've already created or create a new Flow (by selecting "Create New Flow" or "Create Flow"). In another embodiment, a user may choose to start from a template - a Flow that has already been created -- and they can replace the data and choices made in the template with their own to create a Flow.

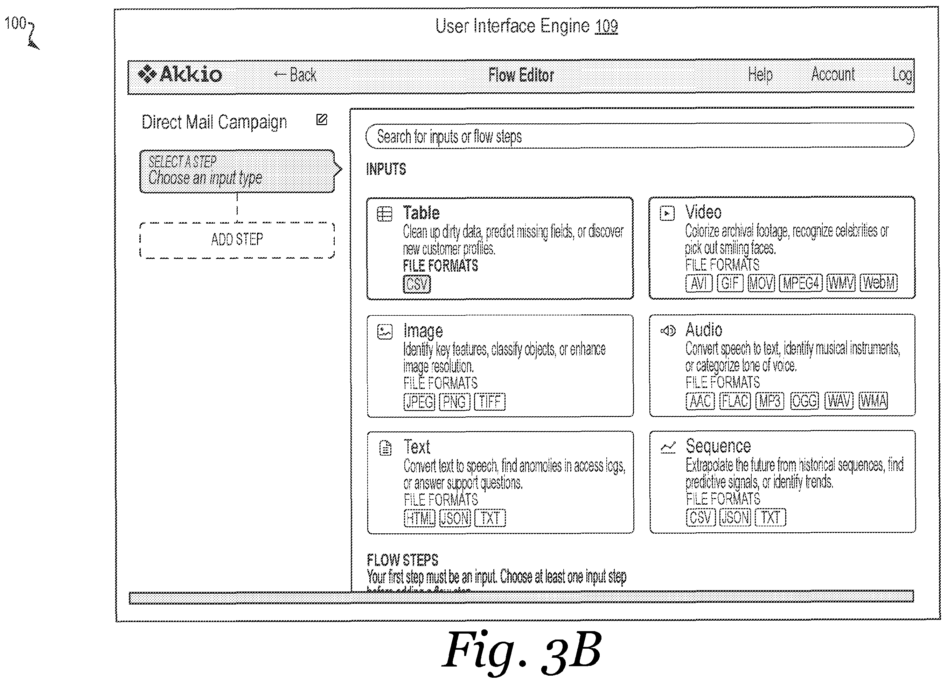

As shown in FIG. 3B, an Input Type Selection page allows a user to select an input type of a dataset they'd like to work with. On the left bar, they may see a visual representation of the steps, or Flow, they're building. The data type include images, audio, and video.

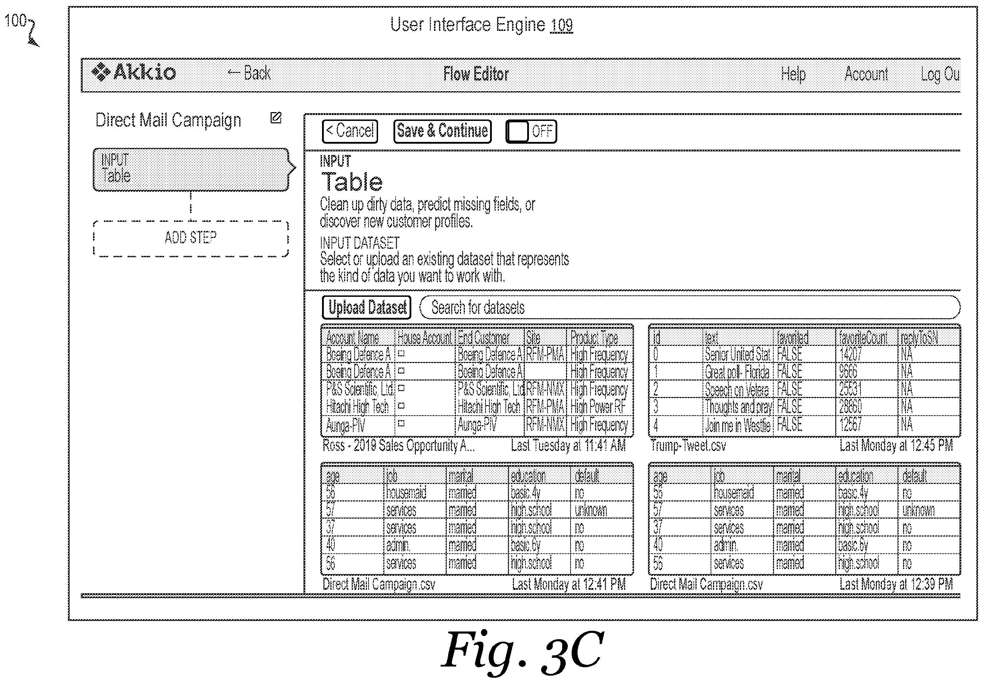

As shown in FIG. 3C, a Data Selection page allows a user to search for and/or select a dataset to work with or upload a new dataset.

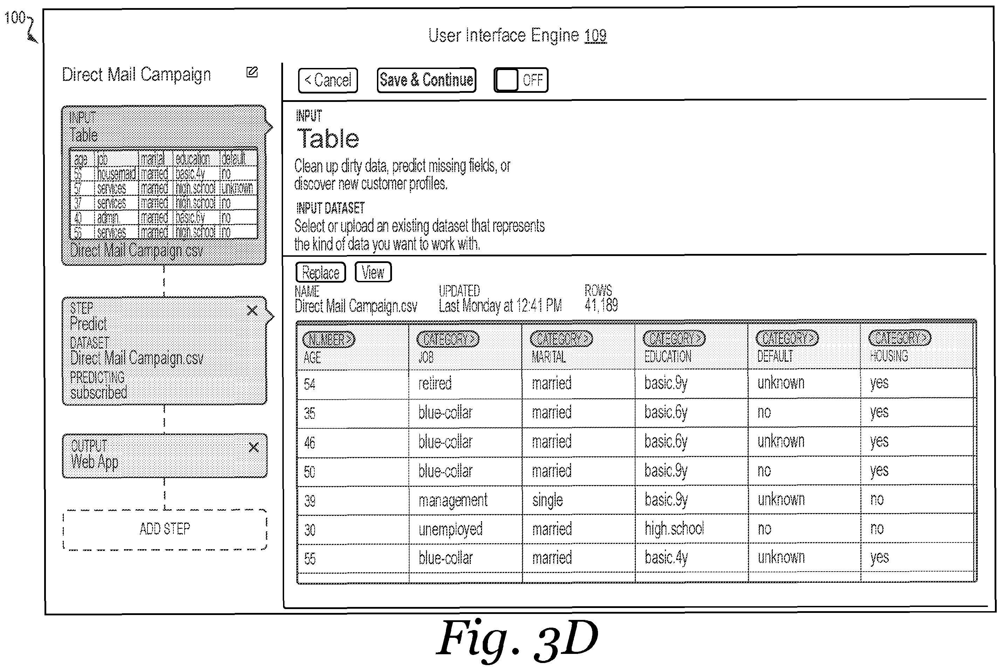

As shown in FIG. 3D, a Field Types page allows a user to see and interact with the dataset they 're working with. In the header for each field, they can see the title of the field. They can also see a label that has automatically been applied to the data in that field. The system 100 may analyze the data in a field and determines what type of data it is. For instance, the system 100 may determine if the column contains a collection of numbers, unique IDs, dates, text, categories, or names and so on, using this determination of the data type in later steps.

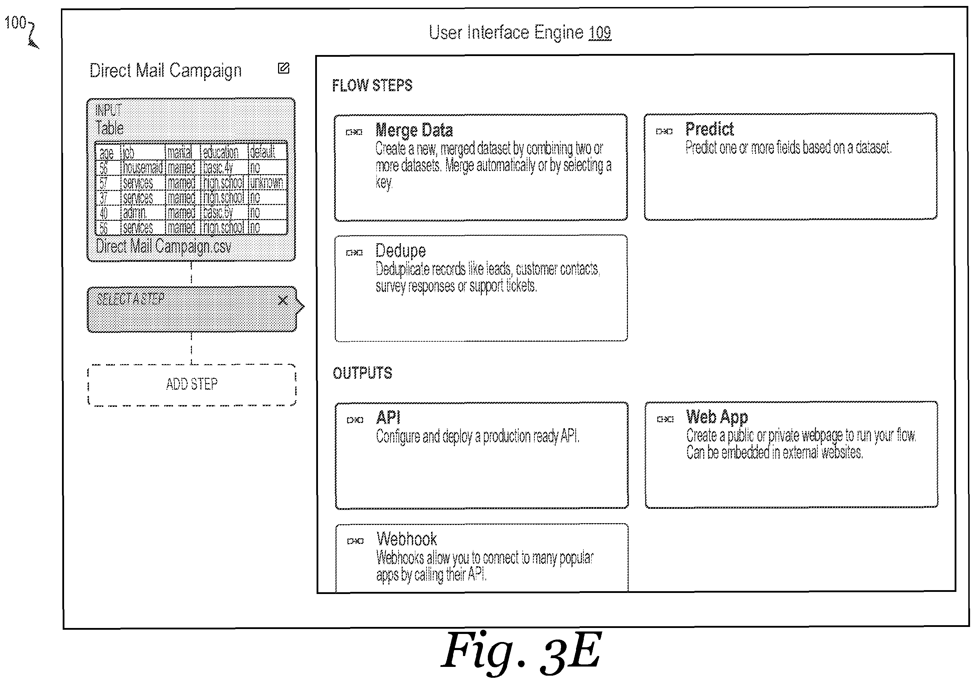

As shown in FIG. 3E, a Flow Steps and Output Selection page, a user selects the next Flow Step to apply to their dataset. For instance, here, a user can choose to Merge multiple datasets together, Dedupe data in a dataset, or Predict to create a prediction machine learning model 107 based on the dataset. Other Flow Steps can include actions such as splitting or filtering a dataset, cleaning up messy or incomplete data, and/or applying Flow Steps that better connect data to programmatic updates via an integration or API.

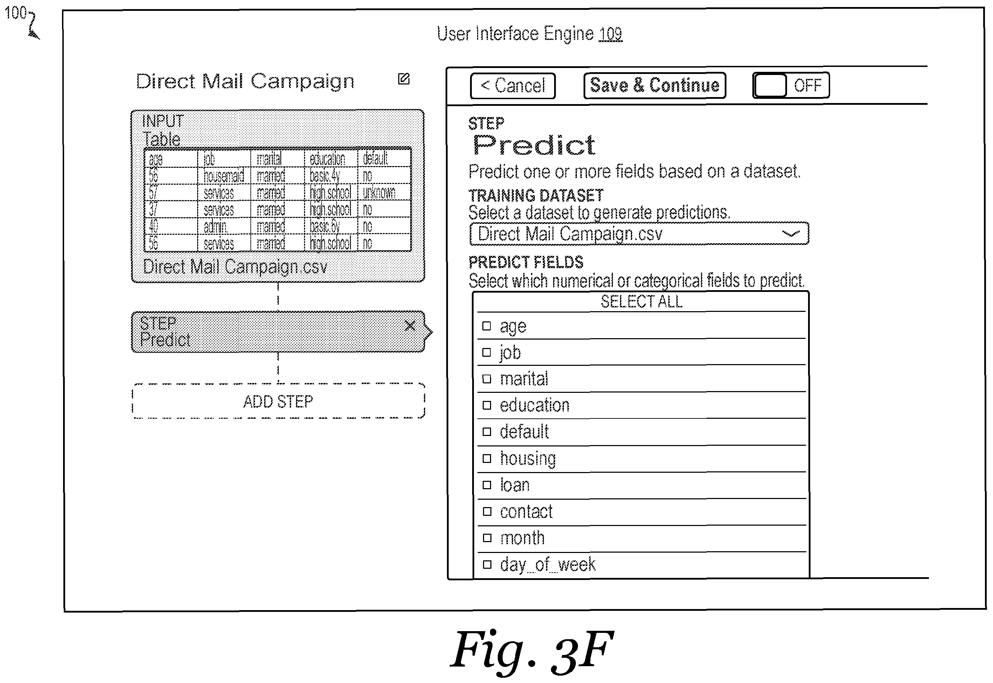

As shown in FIG. 3F, a Predict Screen page allows a user to view the various fields that they can request the system 100 to predict. As shown in FIG. 3F, users may select one or more fields to predict.

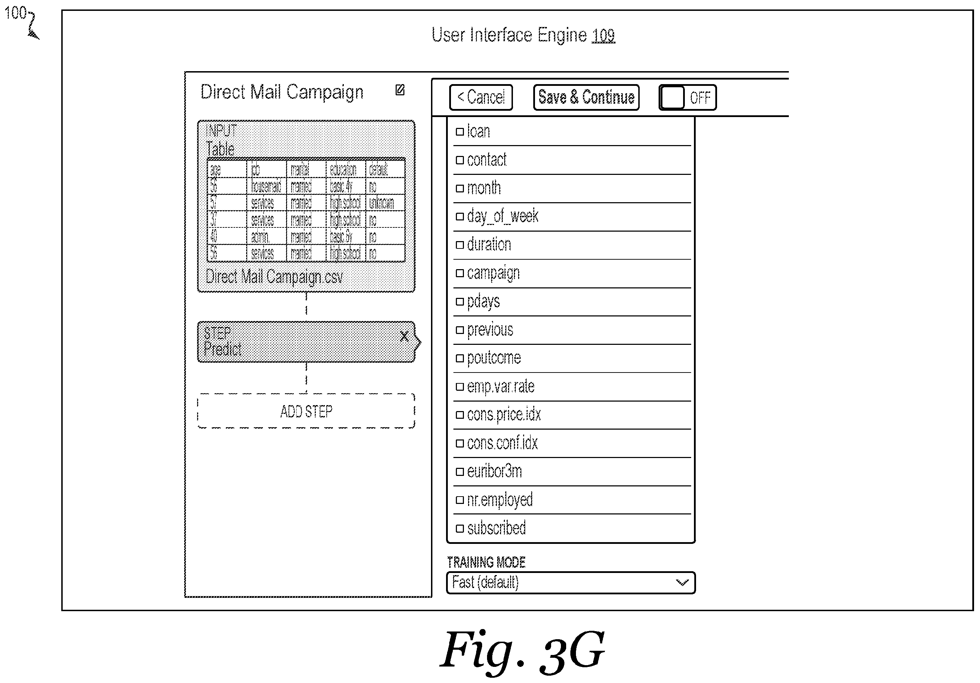

As shown in FIG. 3G, a user may select a Training Mode. For instance, they may select "Fast (default)" as shown here, or other speeds or types of training in the drop down menu, such as "High Quality" or "Best Quality".

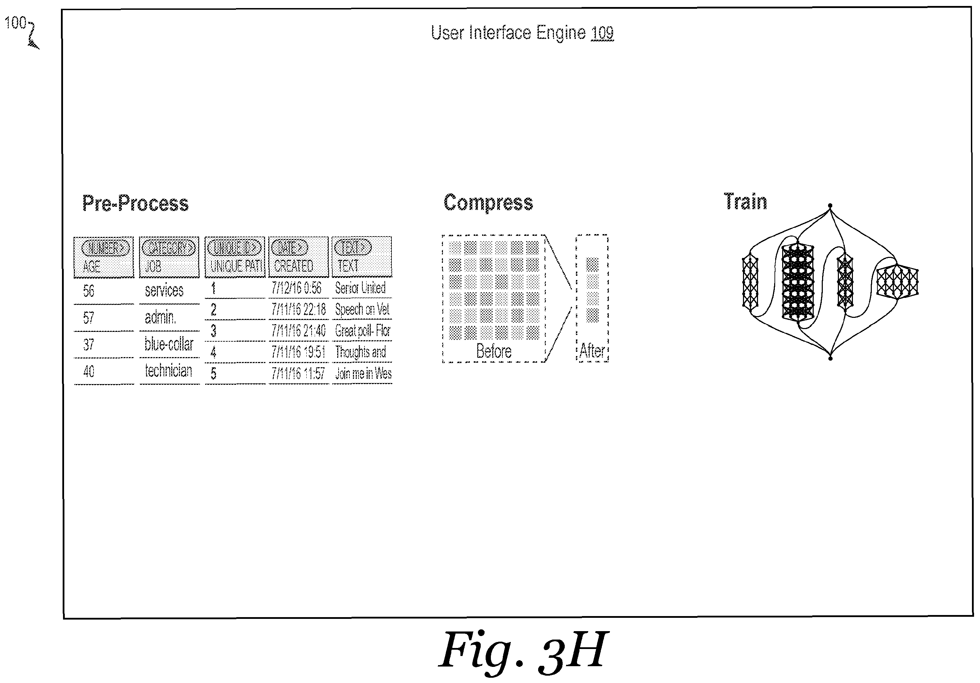

As shown in FIG. 3H, a Compress Step occurs. Datasets may include repetitive data. The system 100 may include functionality for compressing the data before executing a training process, creating a brief representation of the data; this may decrease an amount of time taken to complete the training process, with a larger advantage on bigger datasets.

As shown in FIG. 1B above, a Neural Network Training page allows a user to view a status of the executing method as the dataset is encoded, a machine learning model 107 is selected and/or built, and as the machine learning model 107 trains.

As shown in FIG. 1C above, a "Predictive Model Created" page allows a user to view that they've successfully created a predictive model. They may view information about the quality of the model they've built, such as an accuracy score. They may view a sampling of the validation data. Additionally, they may view the "Most Important Fields", which displays information about what factors or variables were most important, that is, which had the most predictive power in determining outcomes for the model with this dataset.

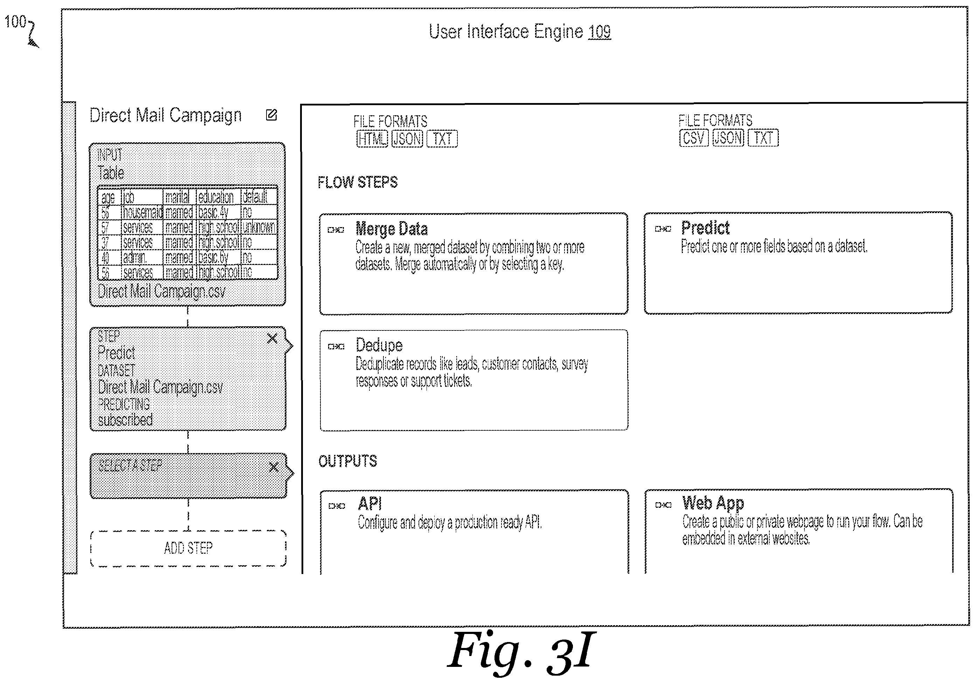

As shown in FIG. 3I, an Output Flow Step occurs. A user may select how to interact with the generated model 107. The user may choose "API" to configure, deploy, and pass data in and out of the model 107 programmatically with an API. The user may select "Web App" to interact with the model 107 through a webpage.

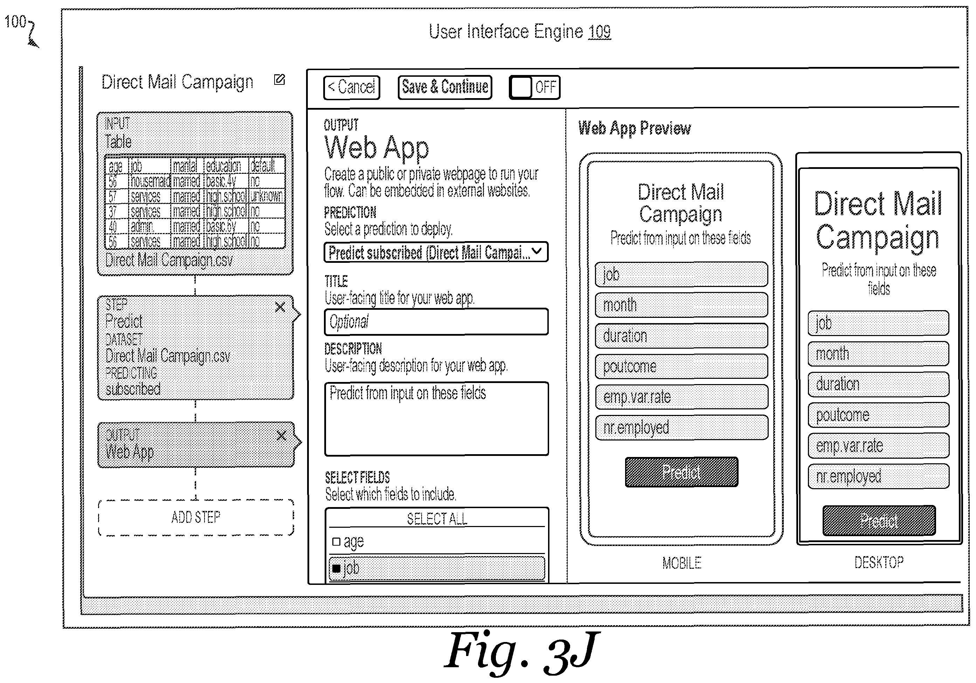

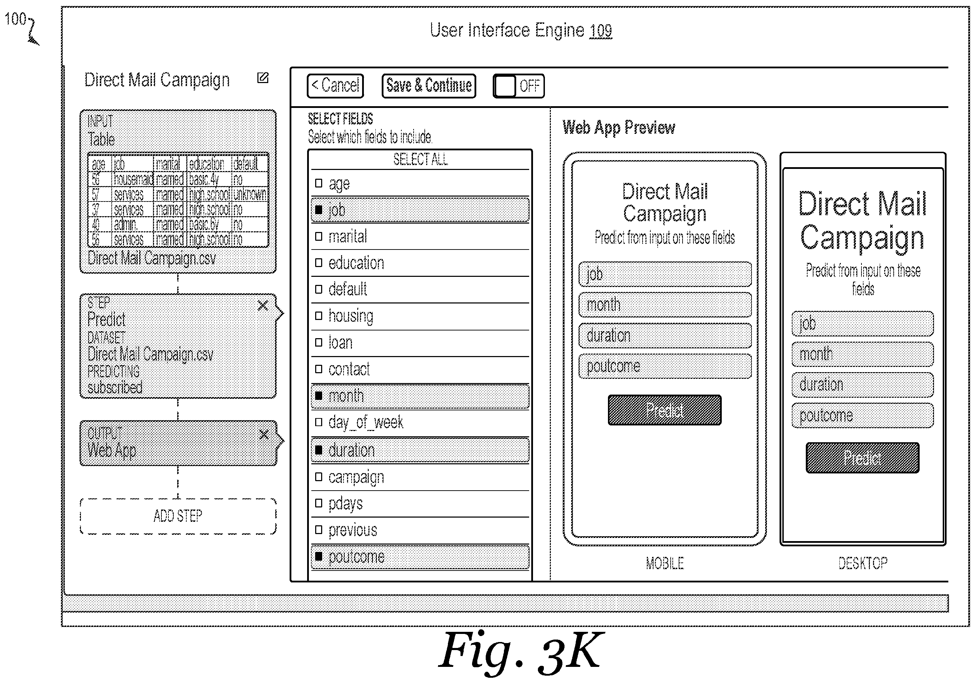

As shown in FIG. 3J, a Web App Output page shows a user how their web app will appear in desktop and mobile applications. The user may title the page, write descriptions, and (as shown in FIG. 3K) select fields to include in the web app. In one embodiment, the "Most Important Field" data may be used to automatically only show fields in a web app (or API integration) that are important to the output of a model 107. The user may also choose to allow a bulk upload - in which case the deployment will accept a dataset as an input (such as a spreadsheet or comma-separated values file) and automatically fill in predictions into that dataset.

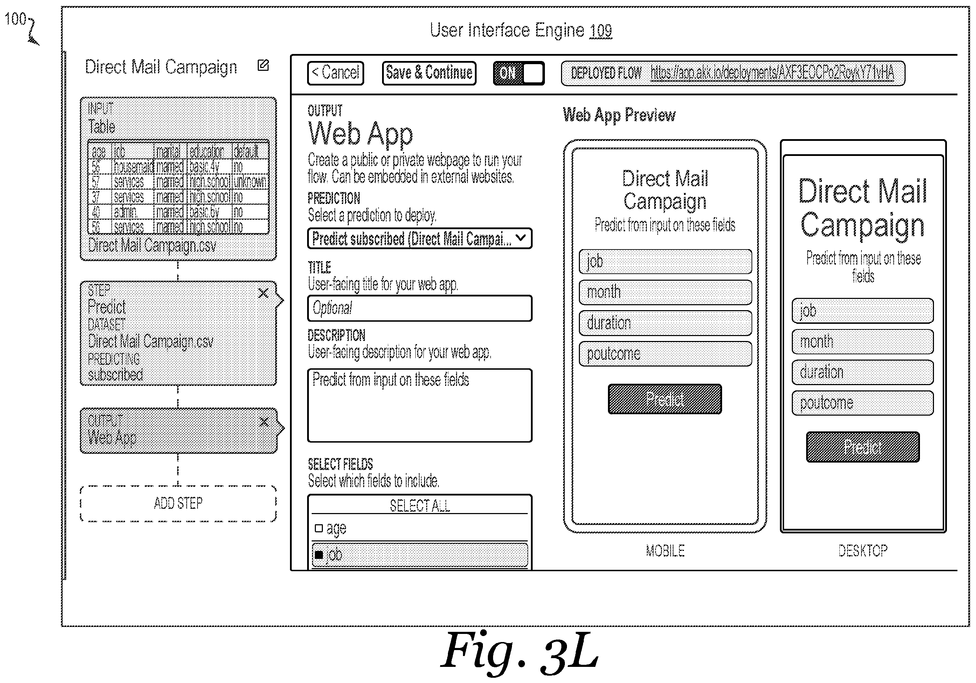

As shown in FIG. 3L, a Deploy Link page allows a user to deploy the flow, or in the embodiment depicted by FIG. 3L the web app, by selecting a button (or slider or similar user interface element). As shown in FIG. 3L, turning the slider "on" deploys the flow in a web app whose link is available at the top of the page.

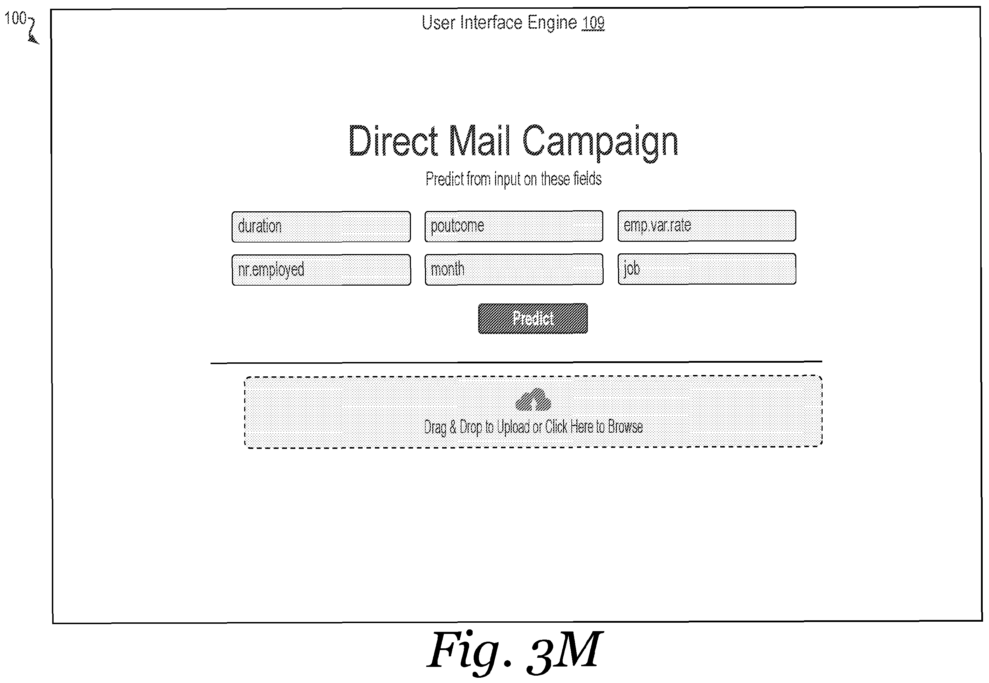

As shown in FIG. 3M, a Prediction App page allows a user to input data into the prediction model - either by typing it in or by batch uploading a dataset to predict. Clicking the "predict" button will run the machine learning model against the input and return the prediction to the user.

Therefore, the methods and systems described herein may provide functionality for dynamically generating a plurality of machine learning systems during processing of a user data set. Such methods and systems may provide functionality for creating, using, and deploying machine learning-based predictive models in a simplified, highly-automated manner requiring minimal user input or intervention. Implementations of the methods and systems described herein provide functionality that when executed may provide substantially similar performance in terms of accuracy of the machine learning models than conventional systems while operating two orders of magnitude faster than conventional systems (e.g., training the machine learning models in about one minute as opposed to one or two hours). Unlike conventional methods, the methods and systems described herein provide functionality for generating machine learning models (including, without limitation, predictive models) after receiving at least one user-specified data set and user-specified task, selecting encoders based on the user-specified data set and the user-specified task, encoding the data with the selected encoders, and then generating (not merely selecting from a library, but generating) at least two machine learning models based on characteristics of at least the user-specified data set and of the user-specified task. This is in contrast to conventional systems and methods, which do not typically wait to generate models until after they have received the data and encoded it, and which do not typically select the encoders and the machine learning models to generate and train based on characteristics of both tasks and data, and which do not typically perform such selection, generation, training, and execution in real time, while a user waits for results. Furthermore, unlike conventional systems and methods, the methods and systems described herein may be configured to execute automatically (e.g., without human intervention) and without requiring a user to undertake tasks requiring specialized skills of a data scientist such as, for example, guiding the search process, data set refinement, or specifying metrics for searching for machine learning models to generate and execute.

In some embodiments, the system 100 includes non-transitory, computer-readable medium comprising computer program instructions tangibly stored on the non-transitory computer-readable medium, wherein the instructions are executable by at least one processor to perform each of the steps described above in connection with FIG. 2.

It should be understood that the systems described above may provide multiple ones of any or each of those components and these components may be provided on either a standalone machine or, in some embodiments, on multiple machines in a distributed system. The phrases 'in one embodiment,' 'in another embodiment,' and the like, generally mean that the particular feature, structure, step, or characteristic following the phrase is included in at least one embodiment of the present disclosure and may be included in more than one embodiment of the present disclosure. Such phrases may, but do not necessarily, refer to the same embodiment. However, the scope of protection is defined by the appended claims; the embodiments mentioned herein provide examples.

The terms "A or B", "at least one of A or/and B", "at least one of A and B", "at least one of A or B", or "one or more of A or/and B" used in the various embodiments of the present disclosure include any and all combinations of words enumerated with it. For example, "A or B", "at least one of A and B" or "at least one of A or B" may mean (1) including at least one A, (2) including at least one B, (3) including either A or B, or (4) including both at least one A and at least one B.

Any step or act disclosed herein as being performed, or capable of being performed, by a computer or other machine, may be performed automatically by a computer or other machine, whether or not explicitly disclosed as such herein. A step or act that is performed automatically is performed solely by a computer or other machine, without human intervention. A step or act that is performed automatically may, for example, operate solely on inputs received from a computer or other machine, and not from a human. A step or act that is performed automatically may, for example, be initiated by a signal received from a computer or other machine, and not from a human. A step or act that is performed automatically may, for example, provide output to a computer or other machine, and not to a human.

The systems and methods described above may be implemented as a method, apparatus, or article of manufacture using programming and/or engineering techniques to produce software, firmware, hardware, or any combination thereof. The techniques described above may be implemented in one or more computer programs executing on a programmable computer including a processor, a storage medium readable by the processor (including, for example, volatile and non-volatile memory and/or storage elements), at least one input device, and at least one output device. Program code may be applied to input entered using the input device to perform the functions described and to generate output. The output may be provided to one or more output devices.

Each computer program within the scope of the claims below may be implemented in any programming language, such as assembly language, machine language, a high-level procedural programming language, or an object-oriented programming language. The programming language may, for example, be LISP, PROLOG, PERL, C, C++, C#, JAVA, or any compiled or interpreted programming language.

Each such computer program may be implemented in a computer program product tangibly embodied in a machine-readable storage device for execution by a computer processor. Method steps may be performed by a computer processor executing a program tangibly embodied on a computer-readable medium to perform functions of the methods and systems described herein by operating on input and generating output. Suitable processors include, by way of example, both general and special purpose microprocessors. Generally, the processor receives instructions and data from a read-only memory and/or a random access memory. Storage devices suitable for tangibly embodying computer program instructions include, for example, all forms of computer-readable devices, firmware, programmable logic, hardware (e.g., integrated circuit chip; electronic devices; a computer-readable non-volatile storage unit; non-volatile memory, such as semiconductor memory devices, including EPROM, EEPROM, and flash memory devices; magnetic disks such as internal hard disks and removable disks; magnetooptical disks; and CD-ROMs). Any of the foregoing may be supplemented by, or incorporated in, speciallydesigned ASICs (application-specific integrated circuits) or FPGAs (Field-Programmable Gate Arrays). A computer can generally also receive programs and data from a storage medium such as an internal disk (not shown) or a removable disk. These elements will also be found in a conventional desktop or workstation computer as well as other computers suitable for executing computer programs implementing the methods described herein, which may be used in conjunction with any digital print engine or marking engine, display monitor, or other raster output device capable of producing color or gray scale pixels on paper, film, display screen, or other output medium. A computer may also receive programs and data (including, for example, instructions for storage on non-transitory computer-readable media) from a second computer providing access to the programs via a network transmission line, wireless transmission media, signals propagating through space, radio waves, infrared signals, etc.

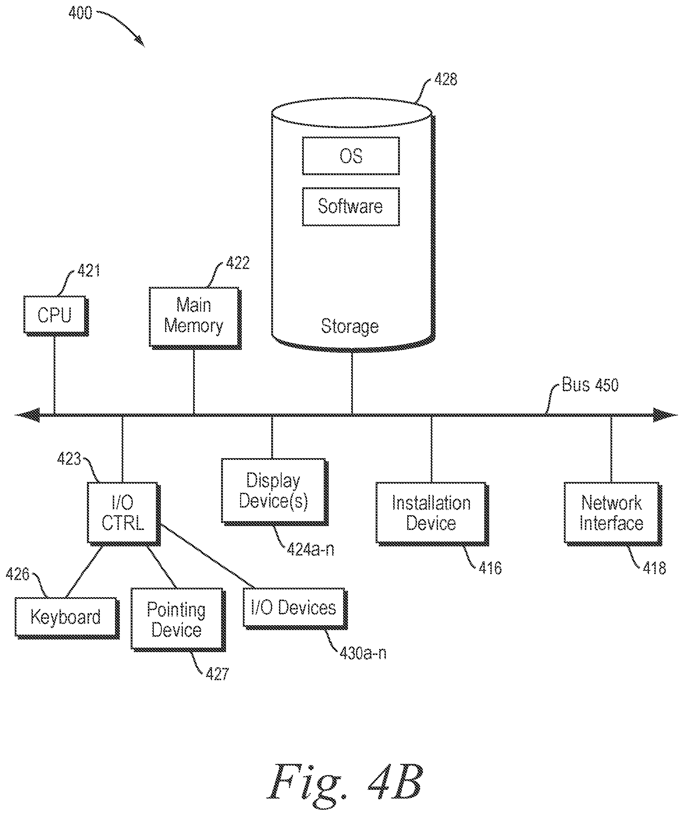

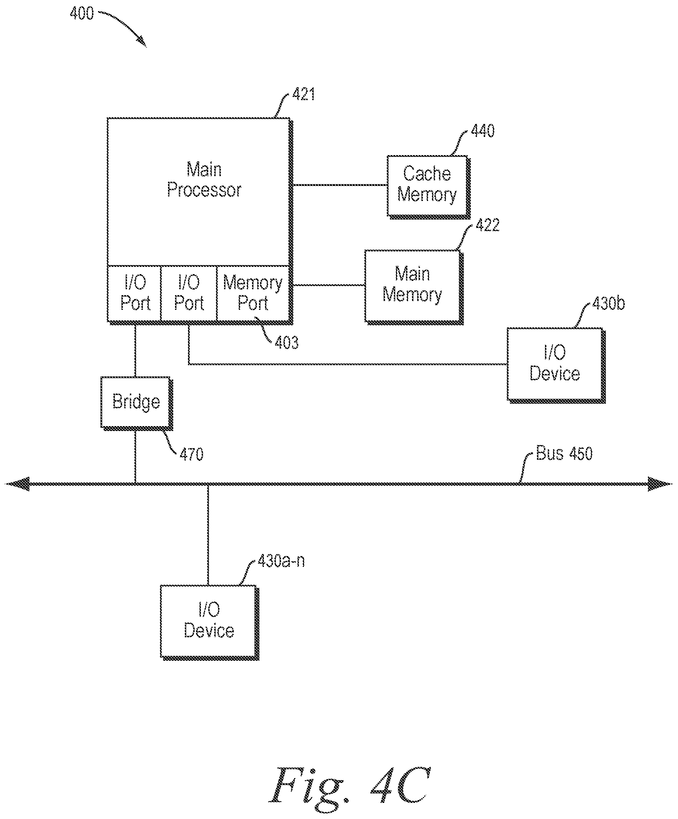

Referring now to FIGs. 4A, 4B, and 4C, block diagrams depict additional detail regarding computing devices that may be modified to execute novel, non-obvious functionality for implementing the methods and systems described above.

Referring now to FIG. 4A, an embodiment of a network environment is depicted. In brief overview, the network environment comprises one or more clients 402a-402n (also generally referred to as local machine(s) 402, client(s) 402, client node(s) 402, client machine(s) 402, client computer(s) 402, client device(s) 402, computing device(s) 402, endpoint(s) 402, or endpoint node(s) 402) in communication with one or more remote machines 406a-406n (also generally referred to as server(s) 406 or computing device(s) 406) via one or more networks 404.

Although FIG. 4A shows a network 404 between the clients 402 and the remote machines 406, the clients 402 and the remote machines 406 may be on the same network 404. The network 404 can be a local area network (LAN), such as a company Intranet, a metropolitan area network (MAN), or a wide area network (WAN), such as the Internet or the World Wide Web. In some embodiments, there are multiple networks 404 between the clients 402 and the remote machines 406. In one of these embodiments, a network 404' (not shown) may be a private network and a network 404 may be a public network. In another of these embodiments, a network 404 may be a private network and a network 404' a public network. In still another embodiment, networks 404 and 404' may both be private networks. In yet another embodiment, networks 404 and 404' may both be public networks.

The network 404 may be any type and/or form of network and may include any of the following: a point to point network, a broadcast network, a wide area network, a local area network, a telecommunications network, a data communication network, a computer network, an ATM (Asynchronous Transfer Mode) network, a SONET (Synchronous Optical Network) network, an SDH (Synchronous Digital Hierarchy) network, a wireless network, and a wireline network. In some embodiments, the network 404 may comprise a wireless link, such as an infrared channel or satellite band. The topology of the network 404 may be a bus, star, or ring network topology. The network 404 may be of any such network topology as known to those ordinarily skilled in the art capable of supporting the operations described herein. The network may comprise mobile telephone networks utilizing any protocol or protocols used to communicate among mobile devices (including tables and handheld devices generally), including AMPS, TDMA, CDMA, GSM, GPRS, UMTS, or LTE. In some embodiments, different types of data may be transmitted via different protocols. In other embodiments, the same types of data may be transmitted via different protocols.

A client 402 and a remote machine 406 (referred to generally as computing devices 400) can be any workstation, desktop computer, laptop or notebook computer, server, portable computer, mobile telephone, mobile smartphone, or other portable telecommunication device, media playing device, a gaming system, mobile computing device, or any other type and/or form of computing, telecommunications or media device that is capable of communicating on any type and form of network and that has sufficient processor power and memory capacity to perform the operations described herein. A client 402 may execute, operate or otherwise provide an application, which can be any type and/or form of software, program, or executable instructions, including, without limitation, any type and/or form of web browser, web-based client, client-server application, an ActiveX control, or a JAVA applet, or any other type and/or form of executable instructions capable of executing on client 402.

In one embodiment, a computing device 406 provides functionality of a web server. The web server may be any type of web server, including web servers that are open-source web servers, web servers that execute proprietary software, and cloud-based web servers where a third party hosts the hardware executing the functionality of the web server. In some embodiments, a web server 406 comprises an open-source web server, such as the APACHE servers maintained by the Apache Software Foundation of Delaware. In other embodiments, the web server executes proprietary software, such as the INTERNET INFORMATION SERVICES products provided by Microsoft Corporation of Redmond, WA, the ORACLE IPLANET web server products provided by Oracle Corporation of Redwood Shores, CA, or the ORACLE WEBLOGIC products provided by Oracle Corporation of Redwood Shores, CA.

In some embodiments, the system may include multiple, logically-grouped remote machines 406. In one of these embodiments, the logical group of remote machines may be referred to as a server farm 438. In another of these embodiments, the server farm 438 may be administered as a single entity.

FIGs. 4B and 4C depict block diagrams of a computing device 400 useful for practicing an embodiment of the client 402 or a remote machine 406. As shown in FIGs. 4B and 4C, each computing device 400 includes a central processing unit 421, and a main memory unit 422. As shown in FIG. 4B, a computing device 400 may include a storage device 428, an installation device 416, a network interface 418, an I/O controller 423, display devices 424a-n, a keyboard 426, a pointing device 427, such as a mouse, and one or more other I/O devices 430an. The storage device 428 may include, without limitation, an operating system and software. As shown in FIG. 4C, each computing device 400 may also include additional optional elements, such as a memory port 403, a bridge 470, one or more input/output devices 430a-n (generally referred to using reference numeral 430), and a cache memory 440 in communication with the central processing unit 421.

The central processing unit 421 is any logic circuitry that responds to and processes instructions fetched from the main memory unit 422. In many embodiments, the central processing unit 421 is provided by a microprocessor unit, such as: those manufactured by Intel Corporation of Mountain View, CA; those manufactured by Motorola Corporation of Schaumburg, IL; those manufactured by Transmeta Corporation of Santa Clara, CA; those manufactured by International Business Machines of White Plains, NY; or those manufactured by Advanced Micro Devices of Sunnyvale, CA. Other examples include SPARC processors, ARM processors, processors used to build UNIX/LINUX "white" boxes, and processors for mobile devices. The computing device 100 may be based on any of these processors, or any other processor capable of operating as described herein.

Main memory unit 422 may be one or more memory chips capable of storing data and allowing any storage location to be directly accessed by the microprocessor 421. The main memory 422 may be based on any available memory chips capable of operating as described herein. In the embodiment shown in FIG. 4B, the processor 421 communicates with main memory 422 via a system bus 450. FIG. 4C depicts an embodiment of a computing device 400 in which the processor communicates directly with main memory 422 via a memory port 403. FIG. 4C also depicts an embodiment in which the main processor 421 communicates directly with cache memory 440 via a secondary bus, sometimes referred to as a backside bus. In other embodiments, the main processor 421 communicates with cache memory 440 using the system bus 450.

In the embodiment shown in FIG. 4B, the processor 421 communicates with various I/O devices 430 via a local system bus 450. Various buses may be used to connect the central processing unit 421 to any of the I/O devices 430, including a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 424, the processor 421 may use an Advanced Graphics Port (AGP) to communicate with the display 424. FIG. 4C depicts an embodiment of a computer 400 in which the main processor 421 also communicates directly with an I/O device 430b via, for example, HYPERTRANSPORT, RAPIDIO, or INFINIBAND communications technology.

One or more of a wide variety of I/O devices 430a-n may be present in or connected to the computing device 400, each of which may be of the same or different type and/or form. Input devices include keyboards, mice, trackpads, trackballs, microphones, scanners, cameras, and drawing tablets. Output devices include video displays, speakers, inkjet printers, laser printers, 3D printers, and dye-sublimation printers. The I/O devices may be controlled by an I/O controller 423 as shown in FIG. 4B. Furthermore, an I/O device may also provide storage and/or an installation medium 416 for the computing device 400. In some embodiments, the computing device 400 may provide USB connections (not shown) to receive handheld USB storage devices such as the USB Flash Drive line of devices manufactured by Twintech Industry, Inc. of Los Alamitos, CA.

Referring still to FIG. 4B, the computing device 400 may support any suitable installation device 416, such as a floppy disk drive for receiving floppy disks such as 3.5-inch, 5.25-inch disks or ZIP disks; a CD-ROM drive; a CD-R/RW drive; a DVD-ROM drive; tape drives of various formats; a USB device; a hard-drive or any other device suitable for installing software and programs. In some embodiments, the computing device 400 may provide functionality for installing software over a network 404. The computing device 400 may further comprise a storage device, such as one or more hard disk drives or redundant arrays of independent disks, for storing an operating system and other software. Alternatively, the computing device 400 may rely on memory chips for storage instead of hard disks.

Furthermore, the computing device 400 may include a network interface 418 to interface to the network 404 through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, 802.15.4, Bluetooth, ZIGBEE, CDMA, GSM, WiMax, and direct asynchronous connections). In one embodiment, the computing device 400 communicates with other computing devices 400' via any type and/or form of gateway or tunneling protocol such as Secure Socket Layer (SSL) or Transport Layer Security (TLS). The network interface 418 may comprise a built-in network adapter, network interface card, PCMCIA network card, card bus network adapter, wireless network adapter, USB network adapter, modem, or any other device suitable for interfacing the computing device 400 to any type of network capable of communication and performing the operations described herein.

In further embodiments, an I/O device 430 may be a bridge between the system bus 450 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a HIPPI bus, a Super HIPPI bus, a SerialPlus bus, a SCI/LAMP bus, a FibreChannel bus, or a Serial Attached small computer system interface bus.

A computing device 400 of the sort depicted in FIGs. 4B and 4C typically operates under the control of operating systems, which control scheduling of tasks and access to system resources. The computing device 400 can be running any operating system such as any of the versions of the MICROSOFT WINDOWS operating systems, the different releases of the UNIX and LINUX operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: WINDOWS 3.x, WINDOWS 95, WINDOWS 98, WINDOWS 2000, WINDOWS NT 3.51, WINDOWS NT 4.0, WINDOWS CE, WINDOWS XP, WINDOWS 7, WINDOWS 8, WINDOWS VISTA, and WINDOWS 10 all of which are manufactured by Microsoft Corporation of Redmond, WA; MAC OS manufactured by Apple Inc. of Cupertino, CA; OS/2 manufactured by International Business Machines of Armonk, NY; Red Hat Enterprise Linux, a Linux-variant operating system distributed by Red Hat, Inc., of Raleigh, NC; Ubuntu, a freely-available operating system distributed by Canonical Ltd. of London, England; or any type and/or form of a Unix operating system, among others.

## Claims

1. A computer-implemented method for dynamically generating a plurality of machine learning models for processing a user data set, the computer-implemented method comprising:
receiving (202), by a machine learning engine, a user-specified data set comprising digital image data or digital audio data, and a user-specified task;
analyzing (204), by the machine learning engine, at least one characteristic of the user-specified data set and at least one characteristic of the user-specified task;
selecting (206), by the machine learning engine, a plurality of encoders based upon the at least one characteristic of the user-specified data set and the at least one characteristic of the user-specified task, wherein the plurality of encoders comprises convolutional neural network, CNN, image encoders for digital image data or CNN audio encoders for digital audio data;
directing (208), by the machine learning engine, each of the selected plurality of encoders to encode the received user-specified data set;
generating (210), by the machine learning engine, a first machine learning model for processing the encoded user-specified data set, the generating based upon the at least one characteristic of the user-specified data set and the at least one characteristic of the user-specified task;
directing (212), by the machine learning engine, the first machine learning model to generate a first output by processing the encoded user-specified data set;
generating (214), by the machine learning engine, a second machine learning model based upon the at least one characteristic of the user-specified data set and the at least one characteristic of the user-specified task, responsive to receiving the encoded user-specified data set and the user-specified task, during execution of the first machine learning model; and
directing (216), by the machine learning engine, the second machine learning model to generate at least a second output by processing the encoded user-specified data set.

2. The computer-implemented method of claim 1, wherein generating (210) the first machine learning model further comprises generating a neural network.

3. The computer-implemented method of claim 1 or claim 2, wherein generating (214) the second machine learning model further comprises generating a neural network.

4. The computer-implemented method of any one of claims 1 to 3, further comprising providing, by the machine learning engine, access to at least one of the first output and the second output.

5. The computer-implemented method of any one of claims 1 to 4, further comprising directing, by the machine learning engine, the second machine learning model to determine a residual of the first output.

6. A non-transitory, computer-readable medium comprising computer program instructions tangibly stored on the non-transitory computer-readable medium, wherein execution of the instructions by at least one processor cause the at least one processor to perform a computer-implemented method according to any one of claims 1 to 5.

## Patentansprüche

1. Computerimplementiertes Verfahren zum dynamischen Erzeugen einer Vielzahl von Maschinenlernmodellen zum Verarbeiten eines Benutzerdatensatzes, wobei das computerimplementierte Verfahren Folgendes umfasst:
Empfangen (202), durch eine Maschinenlernmaschine, eines durch einen Benutzer spezifizierten Datensatzes, der digitale Bilddaten oder digitale Audiodaten und eine durch einen Benutzer spezifizierte Aufgabe umfasst;
Analysieren (204), durch die Maschinenlernmaschine, mindestens einer Eigenschaft des durch den Benutzer spezifizierten Datensatzes und mindestens einer Eigenschaft der durch den Benutzer spezifizierten Aufgabe;
Auswählen (206), durch die Maschinenlernmaschine, einer Vielzahl von Codierern basierend auf der mindestens einen Eigenschaft des durch den Benutzer spezifizierten Datensatzes und der mindestens einen Eigenschaft der durch den Benutzer spezifizierten Aufgabe, wobei die Vielzahl von Codierern Bildcodierer eines faltenden neuronalen Netzes, CNN, für digitale Bilddaten oder CNN-Audiocodierer für digitale Audiodaten umfasst;
Leiten (208), durch die Maschinenlernmaschine, jedes der ausgewählten Vielzahl von Codierern dazu, den empfangenen durch den Benutzer spezifizierten Datensatz zu codieren;
Erzeugen (210), durch die Maschinenlernmaschine, eines ersten Maschinenlernmodells zum Verarbeiten des codierten durch den Benutzer spezifizierten Datensatzes, wobei das Erzeugen auf der mindestens einen Eigenschaft des durch den Benutzer spezifizierten Datensatzes und der mindestens einen Eigenschaft der durch den Benutzer spezifizierten Aufgabe basiert;
Leiten (212), durch die Maschinenlernmaschine, des ersten Maschinenlernmodells dazu, eine erste Ausgabe durch Verarbeiten des codierten durch den Benutzer spezifizierten Datensatzes zu erzeugen;
Erzeugen (214), durch die Maschinenlernmaschine, eines zweiten Maschinenlernmodells basierend auf der mindestens einen Eigenschaft des durch den Benutzer spezifizierten Datensatzes und der mindestens einen Eigenschaft der durch den Benutzer spezifizierten Aufgabe als Reaktion auf das Empfangen des codierten durch den Benutzer spezifizierten Datensatzes und der durch den Benutzer spezifizierten Aufgabe während der Ausführung des ersten Maschinenlernmodells; und
Leiten (216), durch die Maschinenlernmaschine, des zweiten Maschinenlernmodells dazu, mindestens eine zweite Ausgabe durch Verarbeiten des codierten durch den Benutzer spezifizierten Datensatzes zu erzeugen.

2. Computerimplementiertes Verfahren nach Anspruch 1, wobei das Erzeugen (210) des ersten Maschinenlernmodells ferner Erzeugen eines neuronalen Netzes umfasst.

3. Computerimplementiertes Verfahren nach Anspruch 1 oder Anspruch 2, wobei das Erzeugen (214) des zweiten Maschinenlernmodells ferner Erzeugen eines neuronalen Netzes umfasst.

4. Computerimplementiertes Verfahren nach einem der Ansprüche 1 bis 3, ferner umfassend Bereitstellen, durch die Maschinenlernmaschine, von Zugriff auf mindestens eine von der ersten Ausgabe und der zweiten Ausgabe.

5. Computerimplementiertes Verfahren nach einem der Ansprüche 1 bis 4, ferner umfassend Leiten, durch die Maschinenlernmaschine, des zweiten Maschinenlernmodells dazu, einen Rest der ersten Ausgabe zu bestimmen.

6. Nichtflüchtiges, computerlesbares Medium, umfassend Computerprogrammanweisungen, die greifbar auf dem nichtflüchtigen computerlesbaren Medium gespeichert sind, wobei eine Ausführung der Anweisungen durch mindestens einen Prozessor den mindestens einen Prozessor dazu veranlasst, ein computerimplementiertes Verfahren nach einem der Ansprüche 1 bis 5 durchzuführen.

## Revendications

1. Procédé mis en œuvre par ordinateur pour générer dynamiquement une pluralité de modèles d'apprentissage machine pour le traitement d'un ensemble de données d'utilisateur, le procédé mis en œuvre par ordinateur comprenant les étapes consistant à :
recevoir (202), au moyen d'un moteur d'apprentissage machine, un ensemble de données spécifié par l'utilisateur comprenant des données d'image numériques ou des données audio numériques, et une tâche spécifiée par l'utilisateur ;
analyser (204), au moyen du moteur d'apprentissage machine, au moins une caractéristique de l'ensemble de données spécifié par l'utilisateur et au moins une caractéristique de la tâche spécifiée par l'utilisateur ;
sélectionner (206), au moyen du moteur d'apprentissage machine, une pluralité de codeurs sur la base de ladite au moins une caractéristique de l'ensemble de données spécifié par l'utilisateur et de ladite au moins une caractéristique de la tâche spécifiée par l'utilisateur, dans lequel la pluralité de codeurs comprend des codeurs d'image à réseau de neurones convolutif (CNN) pour des données d'image numériques ou des codeurs audio CNN pour des données audio numériques ;
commander (208), au moyen du moteur d'apprentissage machine, à chaque codeur de la pluralité de codeurs sélectionnée de coder l'ensemble de données reçu spécifié par l'utilisateur ;
générer (210), au moyen du moteur d'apprentissage machine, un premier modèle d'apprentissage machine pour le traitement de l'ensemble de données codé spécifié par l'utilisateur, la génération étant basée sur ladite au moins une caractéristique de l'ensemble de données spécifié par l'utilisateur et ladite au moins une caractéristique de la tâche spécifiée par l'utilisateur ;
commander (212), au moyen du moteur d'apprentissage machine, au premier modèle d'apprentissage machine de générer une première sortie au moyen du traitement de l'ensemble de données codé spécifié par l'utilisateur ;
générer (214), au moyen du moteur d'apprentissage machine, un second modèle d'apprentissage machine sur la base de ladite au moins une caractéristique de l'ensemble de données spécifié par l'utilisateur et de ladite au moins une caractéristique de la tâche spécifiée par l'utilisateur, en réponse à la réception de l'ensemble de données codé spécifié par l'utilisateur et de la tâche spécifiée par l'utilisateur, pendant l'exécution du premier modèle d'apprentissage machine ; et
commander (216), au moyen du moteur d'apprentissage machine, au second modèle d'apprentissage machine de générer au moins une seconde sortie au moyen du traitement de l'ensemble de données codé spécifié par l'utilisateur.

2. Procédé mis en œuvre par ordinateur selon la revendication 1, dans lequel la génération (210) du premier modèle d'apprentissage machine comprend en outre la génération d'un réseau de neurones.

3. Procédé mis en œuvre par ordinateur selon la revendication 1 ou la revendication 2, dans lequel la génération (214) du second modèle d'apprentissage machine comprend en outre la génération d'un réseau de neurones.

4. Procédé mis en œuvre par ordinateur selon l'une quelconque des revendications 1 à 3, comprenant en outre la fourniture, au moyen du moteur d'apprentissage machine, d'un accès à au moins une sortie parmi la première sortie et la seconde sortie.

5. Procédé mis en œuvre par ordinateur selon l'une quelconque des revendications 1 à 4, comprenant en outre l'étape consistant à commander, au moyen du moteur d'apprentissage machine, au second modèle d'apprentissage machine de déterminer un résidu de la première sortie.

6. Support non transitoire lisible par ordinateur, comprenant des instructions de programme d'ordinateur stockées de manière tangible sur le support non transitoire lisible par ordinateur, dans lequel l'exécution des instructions par au moins un processeur amène ledit au moins un processeur à réaliser un procédé mis en œuvre par ordinateur selon l'une quelconque des revendications 1 à 5.
